# EUROPEAN PATENT APPLICATION

(11) **EP 1 038 616 A1**
(43) Date of publication of application: **27.09.2000**
(21) Application number: 00302397.5
(22) Date of filing: 23.03.2000
(51) Int. Cl.: B23B 27/06

(54) **Tip having arcuate cutting edge**

(30) Priority: 23.03.1999 JP 7855099
(71) Applicant: NGK Spark Plug Co. Ltd., Nagoya-shi Aichi-ken 467 (JP)
(72) Inventor: Kinkukawa, Tatsuji, NGK Spark Plug., Ltd., Aichi (JP)
(74) Representative: Nicholls, Michael John

(57) **Abstract**

A tip having an arcuate cutting edge capable of enhancing chip disposal is disclosed. A ridgeline 4a of an arcuate cutting edge 4 and a rake face 7a extending rearward therefrom assume the form of a concave arc as viewed from the side of a front flank 8. Through radial feed of the tip 1, a raceway groove having an arcuate cross section is cut. The cross section of an ejected chip is deformed into an arcuate form according to the concave form of the ridgeline 4a and the rake face 7a. Thus, the rigidity of the chip is enhanced and is less likely to weave about. The chip is ejected straight rearwardly along the rake face 7a, and is curled into a spiral form on the rake face 7a, thereby improving chip disposal.

## Description

The present invention relates to a tip having an arcuate cutting edge (a tip used for cutting a groove having a circularly arcuate cross section), and particularly to a tip (a tip for use with a cutting tool) for cutting a groove having a circularly arcuate (radiused) cross section, such as a raceway groove formed on a circumferential surface of a bearing race (an outer circumferential surface of an inner race or an inner circumferential surface of an outer race).

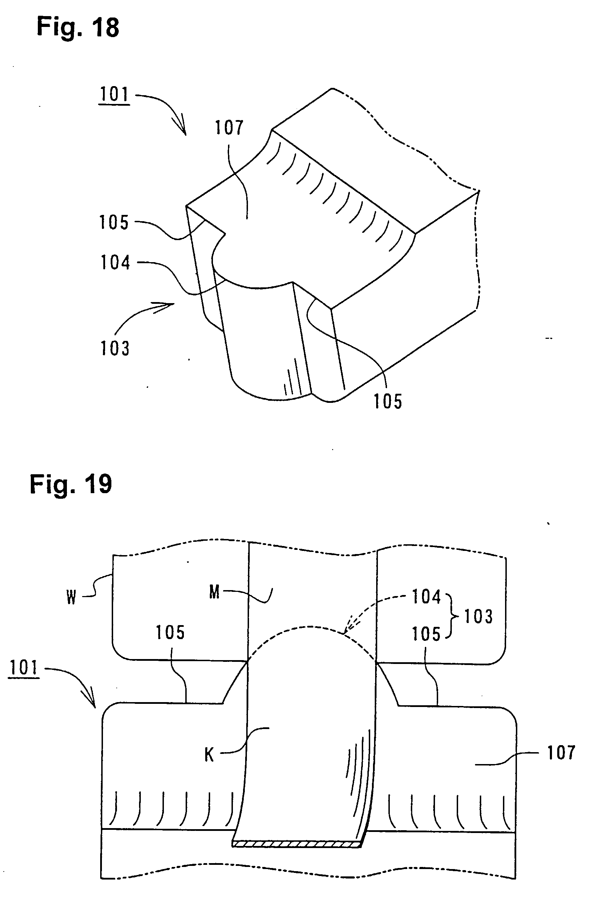

FIGS. 18 and 19 exemplify a tip 101 for cutting a raceway groove on a circumferential surface of a bearing race (an outer circumferential surface of an inner race or an inner circumferential surface of an outer race). The tip 101 is a forming tip for plunge cutting while transferring onto a workpiece the contour (ridgeline) of a cutting edge 103. The tip 101 is not fed along the axis of rotation of a workpiece (bearing race), but is fed radially. That is, the tip 101 is used for plunge cutting in turning.

The tip 101 has an arcuate cutting edge 104 having an arcuate form as viewed from above and adapted to cut a circumferential raceway groove in a workpiece W, and as well has linear cutting edges 105 extending from opposite ends of the cutting edge 104. A rake face 107 assumes the form of a chip breaker which descends rearward from the ridgeline of a cutting edge at a predetermined angle and extends linearly in a lateral direction (width direction).

As shown in FIG. 19, when a raceway groove M is plunge-cut in the workpiece W by means of the tip 101, the width of a chip K varies during cutting. The rake face (chip breaker) 107 causes the ejected chip K to assume a spiral form. However, the cross section of the chip K assumes a flat form as shown in FIG. 19. Further, in such cutting, the chip K tends to become relatively wide, causing strong cutting force. Therefore, feed is set low. As a result, the chip K becomes relatively thin and flat.

Since the chip K ejected through cutting by use of the conventional tip 101 is thin and flat, the rigidity of the chip K is poor. Therefore, the direction of ejection of the chip K becomes unstable, and thus the ejected chip K tends to weave about. Further, the chip K is less likely to break off. Accordingly, even when the ejected chip K assumes a spiral form, the assumed spiral form fails to become an orderly form involving no lateral shift, and involves loose windings, raising problems in chip disposal.

Such a chip K may become entangled with the tip 101 or the workpiece W, potentially scratching a machined surface. Thus, the continuous operation of a machine may be forcedly interrupted. Such a problem is involved not only in cutting by means of a forming tip but also in cutting by means of a triangular or square throwaway tip having a predetermined nose radius for plunge-cutting a groove having an arcuate cross section.

The present invention addresses such a problem involved in plunge-cutting a groove having an arcuate cross section by means of a tip having an arcuate cutting edge, and an object of the present invention is to provide a tip having an arcuate cutting edge capable of improving chip disposal.

Accordingly, a tip having an arcuate cutting edge of the present invention is characterized in that a rake face and a ridgeline of the arcuate cutting edge assume a concave form as viewed from the front flank side.

In cutting a groove by means of the tip having an arcuate cutting edge of the present invention, chips are disposed of in the following manner. Since the rake face and the ridgeline of the arcuate cutting edge assume a concave form as viewed from the front flank side, a chip ejected as a result of cutting accordingly assumes a cross section having a concave form. By virtue of the concave form, the rigidity of an ejected chip is improved as compared with that of a chip having a flat cross section to be ejected in cutting by means of a conventional tip. Accordingly, an ejected chip is less likely to weave about and spirals easily. When a chip spirals, the concave cross section prevents occurrence of lateral shift. Accordingly, a chip is less likely to become entangled with a workpiece, and assumes a small volume, thereby improving chip disposal and productivity.

In the present invention, a concave form which the rake face and the ridgeline of the arcuate cutting edge assume as viewed from the front flank side is not particularly limited. The concave form may be V-shaped or U-shaped. Preferably, the rake face and the ridgeline of the arcuate cutting edge assume the form of a concave arc as viewed from the front flank side. As a result, an ejected chip is curved such that a cross section thereof assumes an arcuate form, and is thus curled into a spiral form densely and orderly without involvement of lateral shift. That is, a chip tends to become a small lump of spirally wound material. Thus, chip disposal is significantly improved. Preferably, a positive angle is imparted to the rake face so that the rake face descends rearward from the ridgeline of the arcuate cutting edge.

Preferably, in the above-described tip of the present invention, a protrusion is provided on the rake face in the vicinity of the ridgeline of the arcuate cutting edge. Through disposition of such a protrusion, a chip ejected through plunge cutting not only assumes a cross section having a concave form but also is deformed such that the concave cross section is further deformed so as to assume a grooved form, since the chip is pressed against the protrusion to thereby be partially squeezed. Accordingly, the rigidity of the chip is further increased, so that chip disposal is further improved. Preferably, the protrusion is located as close as possible to the ridgeline of the arcuate cutting edge (hereinafter may be referred to merely as "cutting edge"); specifically, is located not farther than 2 mm from the ridgeline. If the protrusion is located in excess of 2 mm from the ridgeline, the temperature of a chip may become too low to impart effective deformation to the cross section of the chip.

A single protrusion may be provided in the vicinity of the cutting edge, or a plurality of protrusions may be provided along the ridgeline of the arcuate cutting edge. Through disposition of a plurality of protrusions, a chip assumes a cross section having a plurality of concave forms (a corrugated cross section), thereby further improving its rigidity. When the direction of ejection (flow) of a chip is to be controlled with respect to the lateral direction, the protrusions may be provided asymmetrically with respect to the lateral direction. Preferably, the protrusions are provided on the rake face at a laterally central portion and substantially in a laterally symmetrical manner. Notably, a lateral side of the rake face corresponds to the side of either one end of the ridgeline of the cutting edge. Herein, the term "rear" or "rearward" refers to a direction opposite that of feed (cut) in plunge cutting. Through laterally symmetrical disposition of protrusions, a chip is readily ejected straight rearward and thus readily assumes an orderly, spiral form involving no lateral shift.

The purpose for disposition of protrusion is to deform a red-hot chip. Accordingly, a protrusion may assume the form of an independent island or the form of a peninsula extending from the rearward direction toward the ridgeline of the cutting edge. In the case of assuming the form of an independent island, the protrusion preferably assumes a substantially hemispherical form, but may assume any other form. The height and width of protrusion may be selected according to the length (width) of the ridgeline of the cutting edge and the width of the rake face and such that a chip is appropriately squeezed so as to assume a corrugated form.

The above-described tip of the present invention having an arcuate cutting edge may have one or more other cutting edges in addition to the arcuate cutting edge. For example, in addition to the arcuate cutting edge for cutting a raceway groove in a bearing race, the tip may have linear cutting edges for cutting flat circumferential surfaces, located at the opposite sides of the raceway groove and cutting edges for cutting seal grooves in the bearing race.

Embodiments of the invention will now be described, by way of example only, with reference to the accompanying drawings in which:-
Fig. 1 is a perspective view of a tip having an arcuate cutting edge according to a first embodiment of the present invention and an enlarged view of an essential portion of the tip;
Fig. 2 is an enlarged view of the tip of FIG. 1 as viewed from the side of a front flank;
Fig. 3 is an enlarged sectional view taken along line A-A of FIG. 2;
Fig. 4 is an enlarged sectional view taken along line B-B of FIG. 3;
Fig. 5 is an enlarged sectional view taken along line C-C of FIG. 3;
Fig. 6 is a sectional view of an essential portion of the tip of FIG. 1, illustrating cutting of a raceway groove by means of the tip;
Fig. 7 is a plan view of an essential portion of the tip of FIG. 1, illustrating cutting of a raceway groove by means of the tip;
Fig. 8 is an enlarged perspective view of an essential portion of a tip having an arcuate cutting edge according to a second embodiment of the present invention;
Fig. 9 is an enlarged sectional view taken along line A-A of FIG. 8;
Fig. 10 is a plan view of an essential portion of the tip of FIG. 8, illustrating cutting of a raceway groove by means of the tip;
Fig. 11 is a plan view of an essential portion of the tip of FIG. 8, illustrating cutting of a raceway groove by means of the tip;
Fig. 12 is a plan view of a tip having an arcuate cutting edge according to a third embodiment of the present invention;
Fig. 13 is an enlarged sectional view taken along line A-A of FIG. 12;
Fig. 14 is an enlarged sectional view taken along line B-B of FIG. 12;
Fig. 15 is a plan view of a tip having an arcuate cutting edge according to a fourth embodiment of the present invention;
Fig. 16 is an enlarged sectional view taken along line A-A of FIG. 15;
Fig. 17 is an enlarged sectional view taken along line B-B of FIG. 15;
Fig. 18 is an enlarged perspective view of an essential portion of a conventional tip having an arcuate cutting edge; and
Fig. 19 is a plan view of an essential portion of the conventional tip, illustrating cutting of a raceway groove by means of the tip.

### First Embodiment:

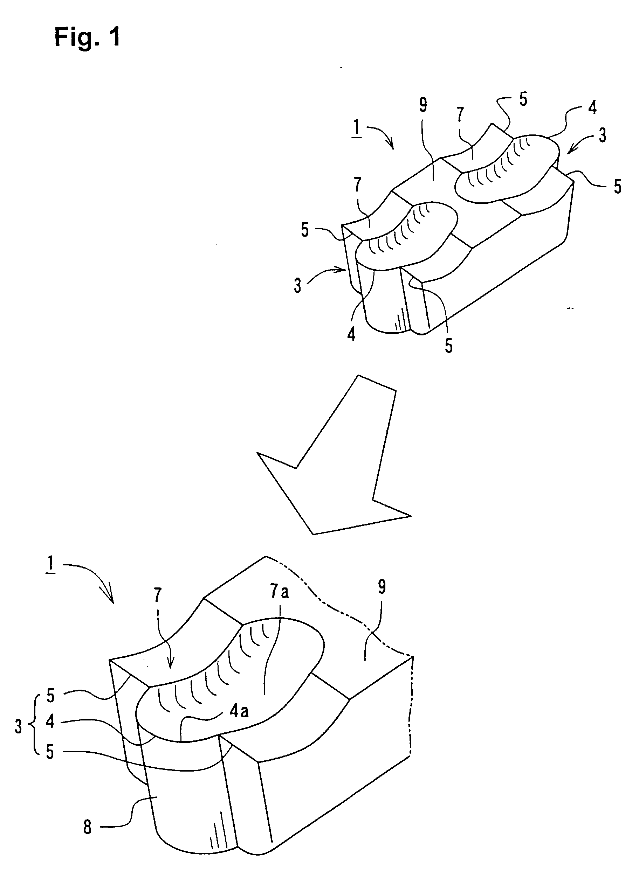

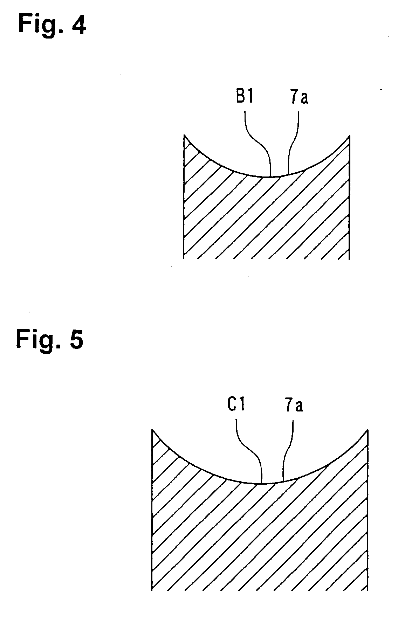

A tip having an arcuate cutting edge according to a first embodiment of the present invention will be described in detail with reference to FIGS. 1 to 7. In these drawings, reference numeral 1 denotes the tip having an arcuate cutting edge (forming tip) according to the present embodiment and adapted to plunge-cut a raceway groove for bearing balls on a circumferential surface of an inner race, which serves as a bearing race, as well as to plunge-cut circumferential surfaces located at opposite sides of the raceway groove, in a single step. The tip 1 is formed of cemented carbide or cermet.

The tip 1 of the present embodiment is a 2-corner-type throwaway tip having two symmetrically provided cutting edges 3, each including an arcuate cutting edge 4 adapted to cut a raceway groove and linear cutting edges 5 located at opposite sides of the arcuate cutting edge 4 and adapted to cut the corresponding circumferential surfaces. The arcuate cutting edge 4 assumes an arcuate form so that a cut raceway groove assumes a circularly arcuate cross section. The linear cutting edges 5 are provided in a laterally symmetrical manner as viewed from a rake face 7. One of the cutting edges 3 will be described below.

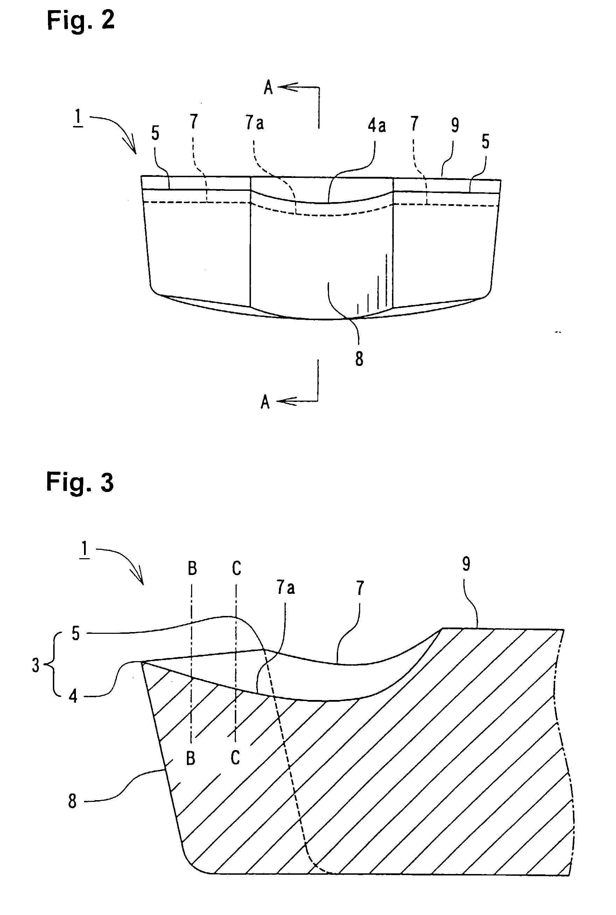

The arcuate cutting edge 4 is formed not only in such a manner as to assume an arcuate form as viewed from above but also such that a ridgeline 4a of the arcuate cutting edge 4 assumes the form of a concave arc as viewed from the side of a front flank 8. Also, a rake face 7a which extends rearward from the ridgeline 4a assumes the form of a concave arc as viewed from the side of the front flank 8. The concave rake face 7a descends rearward at, for example, 6 degrees. A rear portion of the rake face 7a assumes an arcuate form so as to merge into a top face 9 of a central base portion of the tip 1. Specifically, the ridgeline 4a of the arcuate cutting edge 4 and the rake face 7a extending therefrom form an arcuate shape as follows. The cross section of the rake face 7a which is taken perpendicular to the longitudinal direction of the tip 1 (which is taken along the lateral direction of the rake face 7) assumes an arcuate form such that central portions B1 and C1 become a bottom of the arc. The rake face 7a gradually descends rearwardly. A rear end portion of the rake face 7a which assumes an arcuate form merges into the top face 9 of the central base portion of the tip 1 (see FIGS. 3 to 5). The arcuate cutting edge 4 is formed such that the ridgeline 4a assumes an elliptic form as viewed from above, so as to cut a groove having a circularly arcuate cross section. The front flank 8 has a back clearance angle of 6 degrees.

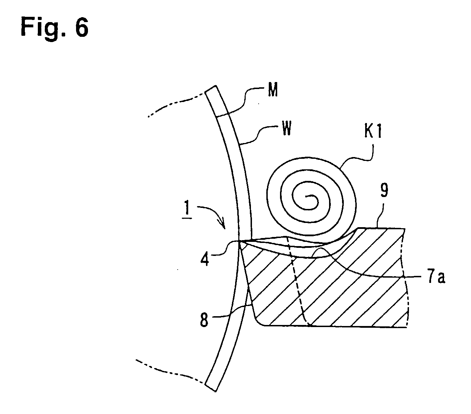

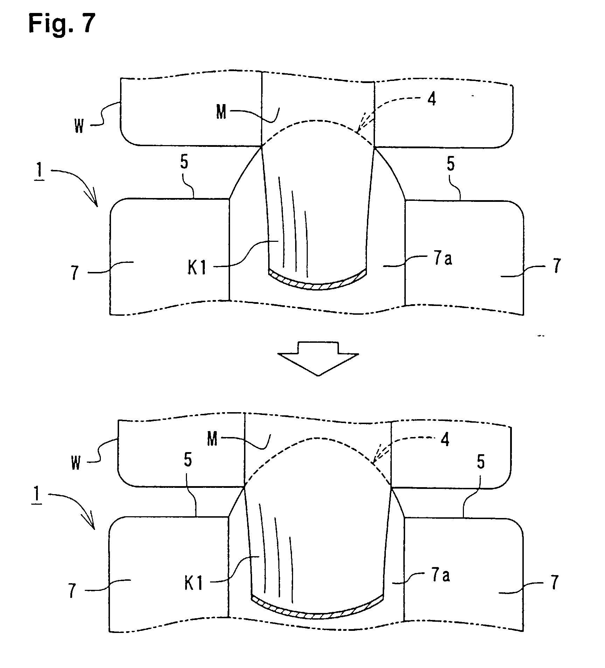

The tip 1 of the present embodiment having the above-described structure plunge-cuts the outer circumferential surface of a bearing race (inner race) in the following manner (see FIGS. 6 and 7). When such an inner race (also called a workpiece) W is to be subjected to plunge cutting, the tip 1 is fed in the radial direction of the inner race W to thereby cut a raceway groove M by means of the arcuate cutting edge 4. As shown in FIGS. 6 and 7, the width of an ejected chip K1 gradually increases, and the chip K1 is ejected rearward on the rake face 7a. The cross section of the chip K1 is deformed into an arcuate form according to the concave form of the rake face 7a. As a result, the rigidity of the chip K1 is enhanced as compared to a flat chip which is produced in cutting by means of a conventional tip. Also, the ejected chip K1 is less likely to weave about. The chip K1 is ejected straight rearward along the rake face 7a, but is curled into a spiral form on the rake face 7a. Thus, the chip K1 does not become entangled with the workpiece W and is ejected in a reduced volume, thereby facilitating collection and disposal of the chip K1 and thus improving chip disposal. Since the ejected chip K1 has an arcuate cross section, the chip K1 drops in the form of a densely curled spiral without involvement of lateral shift, thereby facilitating chip disposal. Preferably, a chamfer of about 0.05 mm width (flat land) as viewed from the side of the rake face 7 is imparted to the ridgeline of cutting edge so as to improve the strength of the cutting edge.

### Second Embodiment:

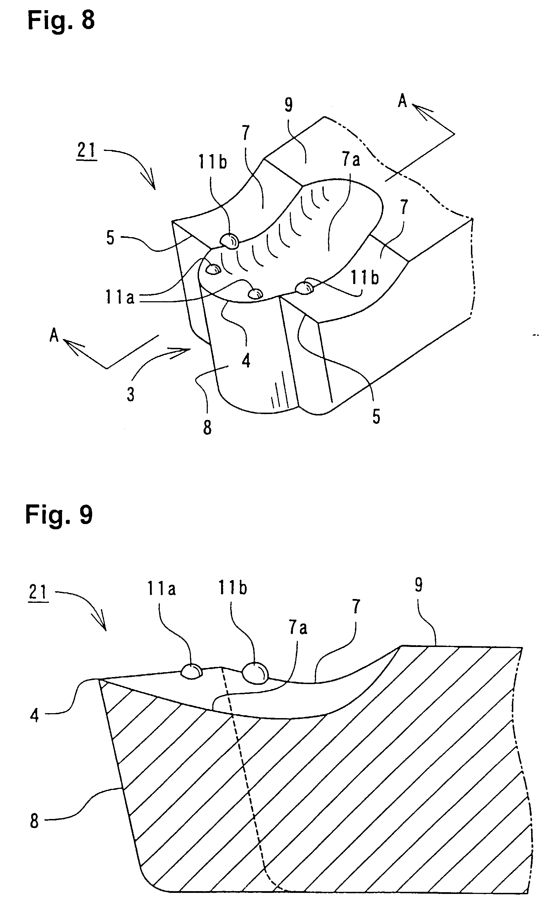

A tip 21 according to a second embodiment of the present invention will next be described in detail with reference to FIGS. 8 to 11. The tip 21 is identical to that of the first embodiment except that protrusions 11a and 11b are provided on the rake face 7 in the vicinity of the ridgeline 4a of the arcuate cutting edge 4. The difference will be mainly described. Two protrusions 11a and two protrusions 11b are provided on the rake face 7 at a laterally central portion and substantially in a laterally symmetrical manner. Each of the protrusions 11a and 11b assumes a circular shape as viewed from above and assumes a hemispherical form. The protrusions 11b are provided more rearward as viewed from above than are the protrusions 11a, which are located laterally more inward than are the protrusions 11b. The protrusions 11b have a diameter greater than that of the protrusions 11a as viewed from above, and have a height higher than that of the protrusions 11a.

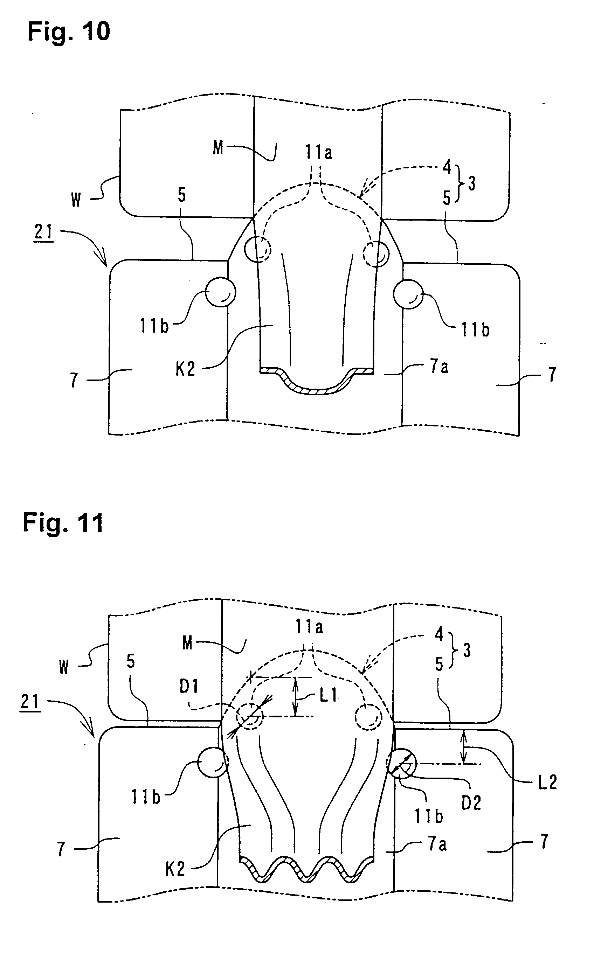

The tip 21 of the present embodiment having the above-described structure plunge-cuts the outer circumferential surface of a bearing race in the following manner. As shown in FIGS. 10 and 11, the width of an ejected chip K2 gradually increases. At the same time, the chip K2 impinges on and are pressed against the two front protrusions 11a and are subjected to the action of lifting opposite side edges thereof. Subsequently, the chip K2 is pressed against the protrusions 11b which are provided laterally more outward and more rearward. As a result, the width of the cross section of the chip K2 gradually increases, and the chip K2 as a whole assumes an arcuate form. Further, as shown in FIG. 11, the protrusions 11a and 11b squeeze the corresponding portions of the chip K2 to thereby cause the chip K2 to be corrugated. Accordingly, the rigidity of the chip K2 becomes higher than a chip having an arcuate cross section which is produced through cutting by means of the tip of the first embodiment. Since the protrusions 11a and 11b are provided symmetrically at a central portion of the tip, the chip K2 is ejected straight rearwardly and is then curled into a spiral form.

The present embodiment employs four protrusions 11a and 11b. However, a single or a plurality of protrusions may be employed. When protrusions are provided in a laterally symmetrical manner as in the case of the present embodiment, a chip is curled into a spiral form. When protrusions are provided asymmetrically, a chip assumes the shape of a coil or helix and is ejected linearly in a fixed direction which is determined by the layout of the protrusions. In other words, the direction of ejection of a chip can be controlled such that the chip is less likely to become entangled with a workpiece or the tip. When a plurality of protrusions are to be provided, the interval thereof may be determined according to deformability of a chip and the width of the arcuate cutting edge 4. When protrusions are provided in the longitudinal direction as in the case of the present embodiment, the height of the rear protrusions 11b is preferably higher than that of the front protrusions 11a. According to the present embodiment, protrusions assume a circular shape as viewed from above and assume a hemispherical form. However, protrusions may assume, as viewed from above, a longitudinally elliptic shape or a peninsular shape extending frontward from a central base portion of the tip.

Preferably, the distance with respect to the longitudinal direction between the ridgeline of the cutting edge and the front end of each of the protrusions 11a and 11b (narrow-width portion of rake face: L1 - D1/2; L2 - D2/2) is 0.1 mm to 2 mm. When the distance is shorter than 0.1 mm, the protrusions become too close to the ridgeline of the cutting edge with a resultant increase in cutting force. When the distance is in excess of 2 mm, deformation (squeeze) of a chip is not effectively performed due to a drop in chip temperature. More preferably, the distance is 0.1 mm to 1 mm. For convenience of manufacture and in view of wear resistance of and prevention of damage to protrusions, the width of a protrusion (the diameter when the protrusion is hemispheric) is preferably 0.2 mm to 2 mm.

### Third Embodiment:

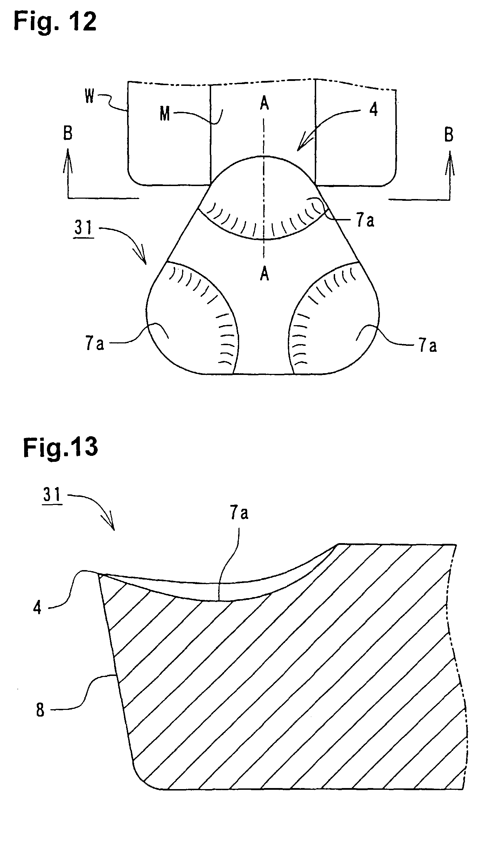

A tip 31 according to a third embodiment of the present invention will next be described in detail with reference to FIGS. 12 to 14. The tip 21 of the second embodiment is a two-corner-type forming tip adapted to plunge-cut a groove in a bearing race, whereas the present third embodiment is similar to the first embodiment in essential features, including chip disposal, except that the tip 31 is a triangular throwaway tip having at each nose (corner) the arcuate cutting edge 4 of the first embodiment. Accordingly, the same features are denoted by common reference numerals, and their description is omitted.

### Fourth Embodiment:

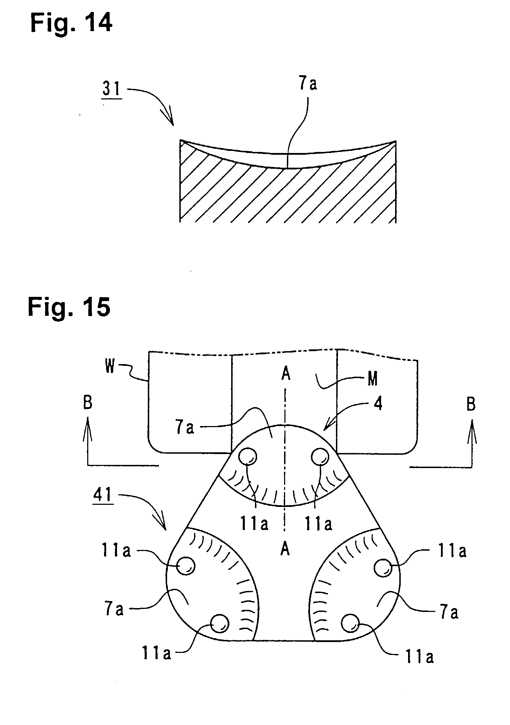

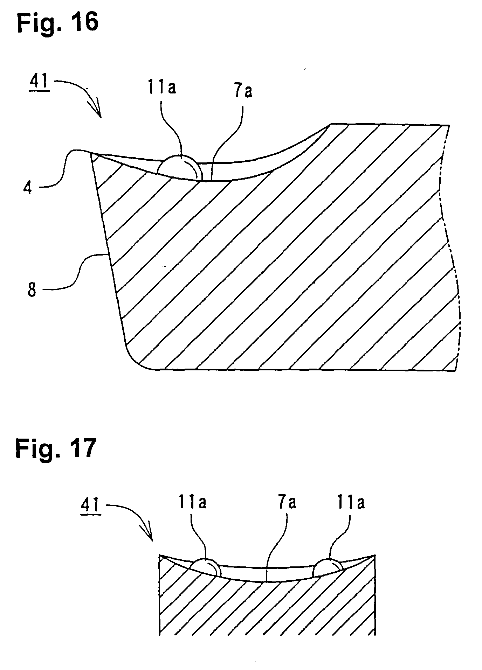

A fourth embodiment of the present invention will next be described in detail with reference to FIGS. 15 to 17. The present embodiment is basically similar in action and effect to the second embodiment except that a tip 41 has two protrusions 11a which are provided on each rake face 7 in a laterally symmetrical manner and in such a manner as to be shifted toward a central portion of the rake face 7, in contrast to the tip 31 of the third embodiment in which no protrusion is provided on each rake face 7. Accordingly, features similar to those of the above-described embodiments are denoted by common reference numerals, and no further description is omitted.

A tip having an arcuate cutting edge according to the present embodiments has been described with reference to a tip for cutting a raceway groove on a circumferential surface of a bearing race or a triangular throwaway tip. However, the present invention is not limited thereto. The present invention may be embodied in the form of a tip adapted to cut a groove having an arcuate cross section on a circumferential surface of a mechanical product, such as various kinds of shaft components, without departing from the present invention.

A tip having an arcuate cutting edge of the present invention yields the following effects. Since a rake face and the ridgeline of the arcuate cutting edge assume a concave form, the cross section of a chip ejected through cutting assumes a concave form accordingly. As compared to a chip which is ejected through cutting by means of a conventional tip and a cross section of which assumes a flat shape, a chip ejected through cutting by means of the tip of the present invention exhibits improved rigidity by virtue of the concave cross section. Accordingly, the chip is less likely to weave about and is thus readily curled into a spiral form. During curling of the chip into a spiral form, the concave cross section yields the effect of preventing occurrence of lateral shift. Thus, the chip is less likely to become entangled with the tip or a workpiece. Since a curled chip assumes a small volume, chip disposal and productivity can be improved. The tip of the present invention is particularly preferably applicable to cutting of a raceway groove on the circumferential surface of a bearing race.

During cutting by means of a tip having an arcuate cutting edge in which a rake face and the ridgeline of the arcuate cutting edge assume a concave form as viewed from the side of a front flank, the cross section of an ejected chip assumes an arcuately curved shape. Thus, the chip is curled into a spiral form densely and orderly without involvement of lateral shift. That is, the chip tends to become a small lump of spirally wound material. Thus, chip disposal is significantly improved.

During cutting by means of a tip having an arcuate cutting edge in which protrusions are provided in the vicinity of the ridgeline of the arcuate cutting edge, a chip ejected through plunge cutting not only assumes a cross section having a concave form but also is deformed such that the concave cross section is further deformed so as to assume a grooved form, since the chip is pressed against the protrusions. Accordingly, the rigidity of the chip is further increased, so that chip disposal is further improved.

## Claims

1. A tip comprising: an arcuate cutting edge (4); a rake face (7); and a front flank side (8), said arcuate cutting edge (4) having a ridgeline (4a), characterized in that said ridgeline (4a) and at least one portion (7a) of said rake face (7) assume a concave form as viewed from said front flank side (8).

2. A tip according to claim 1, wherein said ridgeline (4a) and said at least one portion (7a) of said rake face (7) are in the form of a concave arc.

3. A tip according to claim 1 or 2, further comprising at least one protrusion (11a, 11b) provided on the rake face (7).

4. A tip according to claim 3, wherein said at least one protrusion (11a, 11b) is provided at least partly on said concave portion (7a) of said rake face (7).

5. A tip according to any one of the preceding claims, further comprising at least one protrusion (11a) located in the vicinity of said ridgeline (4a) of said arcuate cutting edge (4).

6. A tip according to claim 5, wherein said at least one protrusion (11a) is located not more than 2 mm from said ridgeline (4a).

7. A tip according to any one of the preceding claims, comprising at least one protrusion (11a, 11b) provided on the rake face (7) at a laterally central portion (7a) and the protrusion is, or the group of protrusions are, disposed substantially in a laterally symmetrical manner.

8. A tip according to any one of claims 3 to 7, wherein said at least one protrusion (11a, 11b) is substantially hemispherical.

9. A tip according to any one of claims 3 to 8, wherein the width of said at least one protrusion is in the range of from 0.2 mm to 2.0 mm.

10. A tip according to any one of the preceding claims, further comprising at least one non-arcuate cutting edge (5).
